# EUROPEAN PATENT APPLICATION

(11) **EP 2 657 946 A1**
(43) Date of publication of application: **30.10.2013**
(21) Application number: 11851473.6
(22) Date of filing: 21.12.2011
(51) Int. Cl.: H01B 7/17, H01B 7/08, H01B 7/20, H01B 7/22, H05K 9/00

(54) **SHIELD CONDUCTOR**

(30) Priority: 24.12.2010 JP 2010288003
(71) Applicant: AutoNetworks Technologies, Ltd., Yokkaichi-shi, Mie 510-8503 (JP); Sumitomo Wiring Systems, Ltd., Yokkaichi-shi, Mie 510-8503 (JP); Sumitomo Electric Industries, Ltd., Osaka-shi, Osaka 541-0041 (JP)
(72) Inventor: AOYAMA, Naoki, Yokkaichi-shi Mie 510-8503 (JP); KUWAHARA, Masanori, Yokkaichi-shi Mie 510-8503 (JP); SONODA, Fujio, Yokkaichi-shi Mie 510-8503 (JP); ITANI, Yasushi, Yokkaichi-shi Mie 510-8503 (JP); SUGIMOTO, Yoshinori, Yokkaichi-shi Mie 510-8503 (JP); IZAWA, Katsutoshi, Yokkaichi-shi Mie 510-8503 (JP)
(74) Representative: Winter, Brandl, Fürniss, Hübner, Röss, Kaiser, Polte - Partnerschaft
(86) International application number: PCT/JP2011/079638
(87) International publication number: WO 2012/086686

(57) **Abstract**

A shield conductor 10 includes a pipe 20 made of metal, an electric wire 11. The electric wire 11 is passed through the pipe 20. The pipe 20 includes a round portion 24 and a deformed portion 21. The round portion 24 has a constant outer diameter in a peripheral direction of the pipe 20. The deformed portion 21 is in a different position from the round portion 24 in an extension direction in which the pipe 20 extends. The deformed portion 21 has a short diameter portion 22A and a long diameter portion 22B each having a different outer diameter from each other in the peripheral direction of the pipe 20. The round portion 24 curves in the extension direction.

## Description

### TECHNICAL FIELD

The present invention relates to a shield conductor.

### BACKGROUND ART

A shield conductor having a shielding function is used to interconnect devices such as an inverter, a motor, and a battery in a vehicle, for example, a hybrid car and an electric car. One example of such a shield conductor is described in Patent Document 1. The shield conductor includes a metal pipe and a plurality of electric wires that are housed in the pipe. The pipe has a circular outer periphery. The pipe is bent along a wiring route.
Patent Document 1: Japanese Unexamined Patent Publication No. 2004-171952

### DISCLOSURE OF THE PRESENT INVENTION

There is a demand for arranging the shield conductor effectively using space for installation of a shield conductor in a vehicle. More specifically, when a metal pipe having a circular outer periphery is arranged under a floor of a vehicle, the space under the floor requires at least the same height as the outer diameter of the metal pipe. The space under the floor has a limitation in height and thus a significant level of layout design is required for the metal pipe. On the other hand, the space that expands lateral to the metal pipe may be larger than a size required for housing the metal pipe. Therefore, the conventional technology has a problem in arrangement of the shield conductor not effectively using the space.

This invention was accomplished in view of the foregoing circumstances. An object of this invention is to provide a shield conductor that can be arranged using a space effectively.

A shield conductor according to this invention includes a pipe made of metal and an electric wire. The electric wire is passed through the pipe. The pipe includes a round portion and a deformed portion. The round portion has a constant outer diameter in a peripheral direction of the pipe. The deformed portion is in a different position from the round portion in an extension direction in which the pipe extends. The deformed portion has a short diameter portion and a long diameter portion having different outer diameters in the peripheral direction of the pipe. The round portion curves in the extension direction.

According to the above configuration, the shield conductor is arranged such that a direction of the short diameter portion (a thickness direction) corresponds to a narrower direction of an installation space and arranged such that a direction of the long diameter portion (a thickness direction) corresponds to a wider direction of the installation space. Thus, the shield conductor can be housed in the space using a narrower space in the direction of the short diameter portion (the thickness direction) and using a wider space in the direction of the long diameter portion (the thickness direction). With this configuration, the shield conductor can be arranged using the space effectively.

In a bending process of the deformed portion, the deformed portion of the pipe can be bent relatively easier in the short diameter direction. However, the deformed portion is not easily bent in the long diameter direction. This may reduce flexibility in routing of the shield conductor. In view of the above circumstances, the pipe of this embodiment curves in the extension direction at the round portion. Thus, the pipe can be easily bent in three-dimensional directions at the round portion compared with bending at the deformed portion. Therefore, the shield conductor can enhance the routing freedom by the round portion while effectively using the space by the deformed portion.

According to the present invention, the shield conductor can be arranged using a space effectively.

### BRIEF DESCRIPTION OF THE DRAWINGS

Fig. 1 is a plan view of a shield conductor according to a first embodiment.
Fig. 2 is a side view of the shield conductor.
Fig. 3 is a cross-sectional view taken along line D-D and line F-F in FIG. 1.
FIG. 4 is a cross-sectional view taken along line E-E in FIG. 1.
FIG. 5 is a plan view of a forming machine.
FIG. 6 is a side-sectional view of the forming machine.
FIG. 7 is a front view of the forming machine.
FIG. 8 is a plan view of a shield conductor according to a second embodiment.
FIG. 9 is a view illustrating the shield conductor passed through a heat shrinkable tube.
FIG. 10 is a view illustrating a shield conductor connected to a braided wire according to a third embodiment.
FIG. 11 is a cross-sectional view illustrating a flat electric wire used for a shield conductor according to a fourth embodiment.

### EXPLANATION OF SYMBOLS

10: shield conductor, 11: electric wire, 20, 50: pipe, 21: deformed portion, 22: constant portion, 22A: short diameter portion, 22B: long diameter portion, 23: transitional portion, 24: round portion, 30: forming machine, 31, 32: roller, 31A, 32A: concave surface, 33, 34: supporting member, 35: regulating mechanism, 36: fixed portion, 37: movable portion, 38: roller adjustment portion, 39: base portion, 40: heat shrinkable tube, 51 : first member, 52: second member, 53: braided wire, 60: flat electric wire, W: vehicle

### BEST MODE FOR CARRYING OUT THE INVENTION

### <First embodiment>

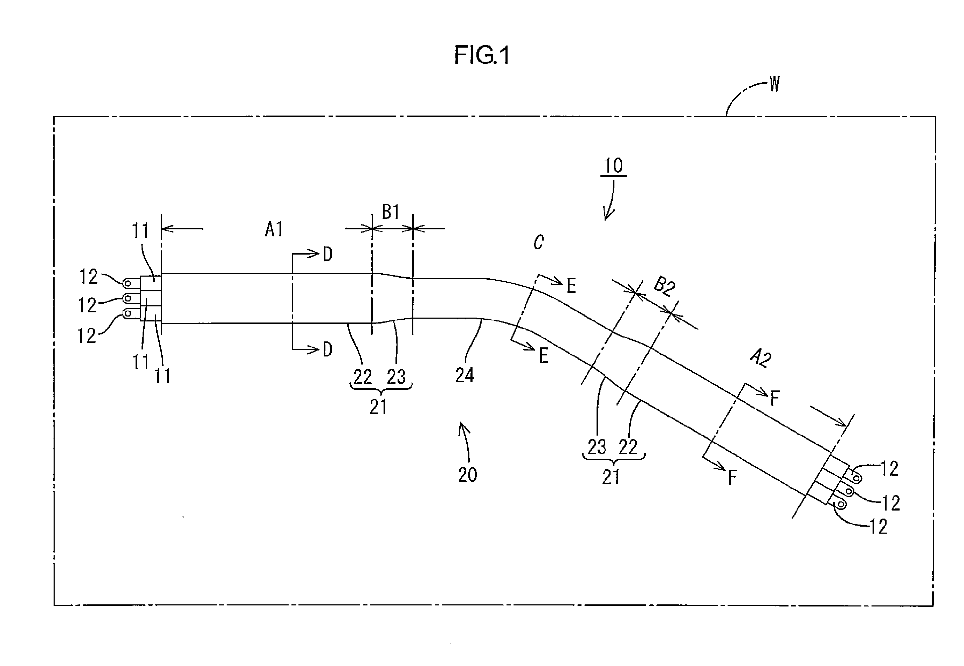

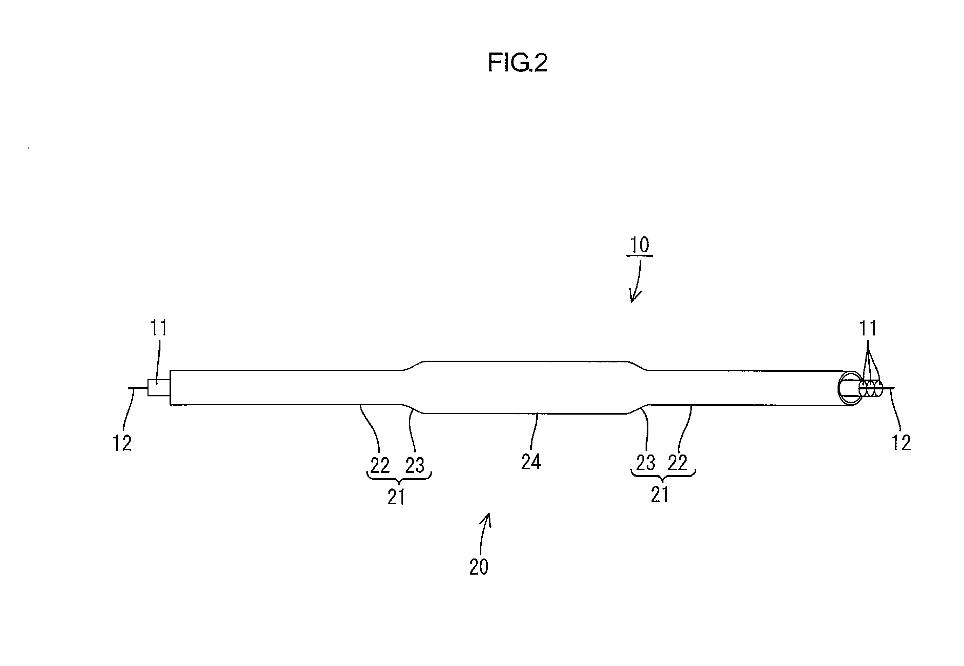

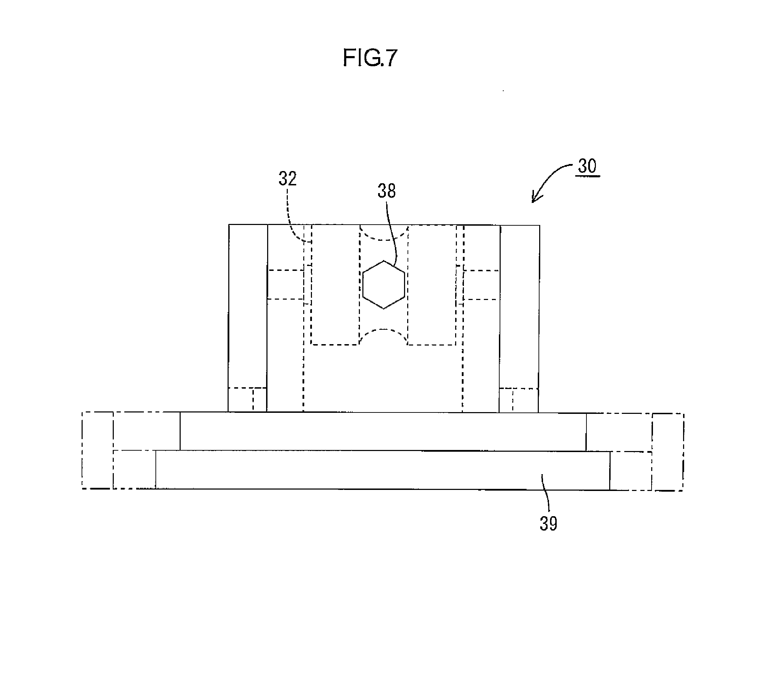

A first embodiment of the present invention will be described with reference to FIG. 1 to FIG. 7. Shield conductors 10 of this embodiment are routed among devices in a power source including a battery, an inverter, and a motor (not illustrated) for driving an electric car. The shield conductor 10 arranged between the battery and the inverter includes two electric wires 11. The shield conductor 10 arranged between the inverter and the motor includes three electric wires 11. In the following description, the shield conductor 10 including three electric wires 11 and arranged (or routed) between the inverter and the motor under a floor of vehicle W will be described. In the description, the top-bottom direction is defined with reference to FIG. 2. The lower side and the upper side in FIG. 1 are defined as a right side and a left, respectively.

As illustrated in FIG. 1, the shield conductor 10 includes three electric wires 11 and a pipe 20. The electric wires 11 are passed through the pipe 20. The pipe 20 has a shielding function. Each of the electric wires 11 is a coated electric wire having a round shape (a circular cross section). The electric wire 11 includes a core wire 11A and an insulation coating 11B that covers the core wire 11A. The electric wire 11 does not include a shielding layer. The core wire 11A is made of copper or copper alloy. The core wire 11A is a twisted wire made of a plurality of metal wires that are twisted one another. The three electric wires 11 have ends with which metal terminals 12 are connected, respectively, and extended outside the pipe 20.

Each of the metal terminals 12 includes a terminal connecting portion and an electric wire connecting portion. The terminal connecting portion is connected to a terminal of a destination device. The terminal connecting portion includes a through hole through which a shaft of a bolt can be passed. The electric wire connecting portion continues from the terminal connecting portion so as to be integral therewith, and is connected with the electric wire 11. The electric wire connecting portion includes a wire barrel and an insulation barrel. The wire barrel is crimped onto an end of the core wire 11A of the electric wire 11 by bending. The end of the core wire 11A is exposed by stripping off the end of insulation coating 11B of the electric wire 11. The insulation barrel holds the electric wire 11 over the insulation coating 11B.

The pipe 20 is made of metal (e.g., aluminum, aluminum alloy, copper, and cooper alloy). The pipe 20 has an elongated shape. The pipe 20 includes deformed portions 21 and a round portion 24 (an area C in FIG. 1). Each of the deformed portions 21 has irregular outer diameters and extends linearly. The round portion 24 has a constant diameter and curves in an extension direction (a right-and-left direction in FIG. 1) of the pipe 20 in which the pipe 20 extends.

The deformed portions 21 are located at a front end and a rear end of the pipe 20. The deformed portions 21 are, therefore, formed at different positions from the round portion 24 in the extension direction of the pipe 20. Each of the deformed portions 21 includes a constant portion 22 (A1 and A2 in FIG. 1) and a transitional portion 23 (B1 and B2 in FIG. 1). The constant portion 22 has a flat shape, cross sections of which at different positions are the same. The transitional portion 23 continues from the constant portion 22 to the round portion 24. The transitional portion 23 has a shape, cross sections of which at different positions gradually change.

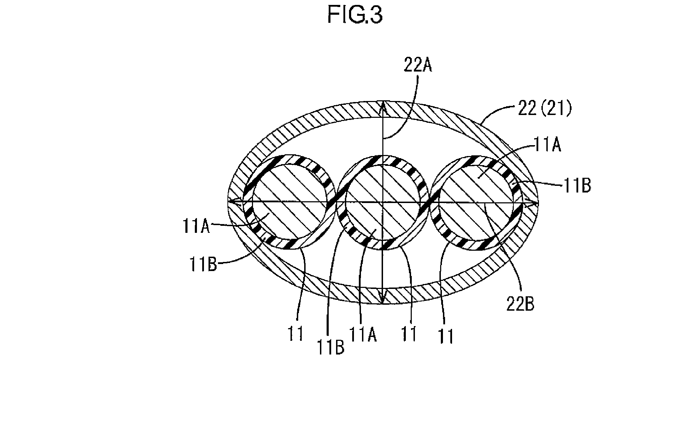

As illustrated in FIG. 3, the constant portion 22 has the substantially flat shape (an ellipse shape). The constant portion 22 has a short diameter portion 22A and a long diameter portion 22B. The short diameter portion 22A has the shortest outer diameter in the cross section of the pipe 20. The long diameter portion 22B is formed in the position perpendicular to the short diameter portion 22A in the periphery direction of the pipe 20. The long diameter portion 22B has the longest diameter in the cross section of the pipe 20 (a portion having a different outer diameter from that of the short diameter portion 22A).

In this embodiment, the outer diameter of the short diameter portion 22A is larger than a sum of a diameter of the electric wire 11 and thicknesses of the short diameter portion 22A (thicknesses of top and bottom parts of the short diameter portion 22A). The outer diameter of the long diameter portion 22B is slightly larger than a sum of diameters of the three electric wires 11 and thicknesses of the long diameter portion 22B (thicknesses of a right and a left parts of the long diameter portion 22B). The outer diameter of the long diameter portion 22B is of a sufficient size to pass the three electric wires 11 that are laterally aligned.

As illustrated in FIG. 1, each of the transitional portions 23 is formed through plastic deformation of a cylindrical pipe into the shape of the constant portion 22. The transitional portion 23 smoothly continues from the constant portion 22 to the round portion 24.

The round portion 24 has a round outer circumference. The round portion 24 is a non-deformed part and remains a shape of the cylindrical pipe (with a circular cross section) made of metal.

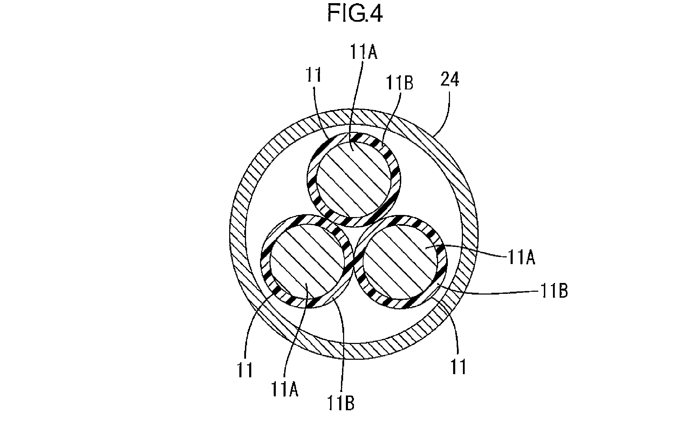

As illustrated in FIG. 3, the three electric wires 11 in the constant portion 22 are horizontally arranged. The arrangement of the three electric wires 11 gradually changes in the transitional portion 23. As illustrated in FIG. 4, the electric wires 11 are arranged in the round portion 24 such that lines connecting the centers of the electric wires 11 form a substantially regular triangle.

The pipe 20 is connected with a braided wire such that an end of the braided wire covers the end of the pipe 20. The pipe 20 and the braided wire can be connected by welding, soldering, or swaging with a swage ring, whatever is appropriate.

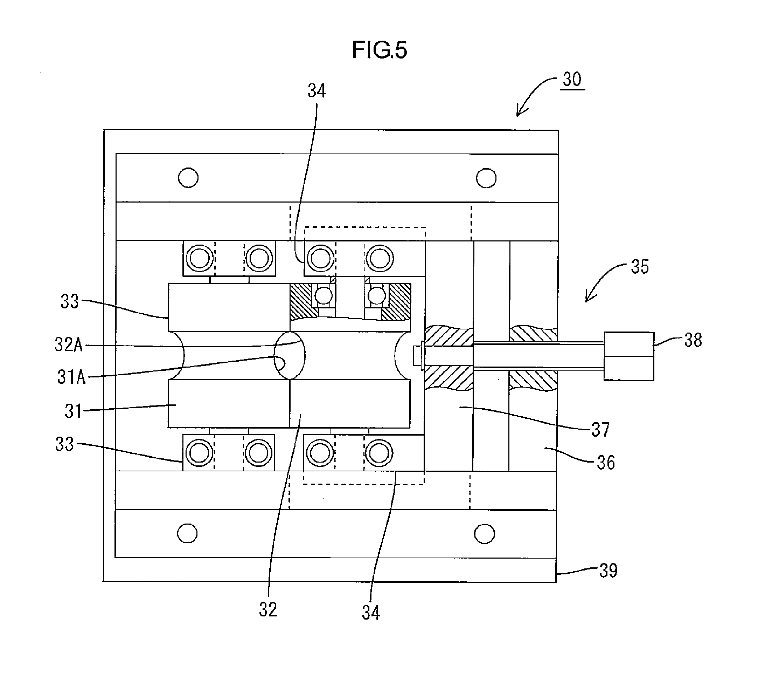

The pipe 20 is formed by a cold rolling technology using a forming machine 30. As illustrated in FIG. 5, the forming machine 30 includes a pair of rollers 31 and 32, supporting members 33 and 34, a regulating mechanism 35, a base portion 39, a drive member (not illustrated), and an input portion (not illustrated). The supporting members 33 and 34 support rollers 31 and 32 with shafts of the rollers 31 and 32, respectively. The regulating mechanism 35 moves the roller 32 so as to regulate a distance between the rollers 31 and 32. The base portion 39 is a thick board. The base portion 39 holds the supporting members 33 and 34 and the regulating mechanism 35. The drive member rotates each of the rollers 31 and 32. The input portion commands the drive member to drive.

The rollers 31 and 32 have a cylindrical shape. Each roller 31 or 32 has a groove in the round outer periphery in the middle area thereof in the axial direction of the roller 31 or 32 for an entire circumference. The groove is formed by concaving the periphery of the roller 31 or 32 such that concave surfaces 31A and 32A are formed in the periphery. Each of the concave surfaces 31A and 32A has an appropriate curvature to form the deformed portion 21 (the transitional portion 23 and the constant portion 22). Thus, when the rollers 31 and 32 are moved closer to each other, the concave surfaces 31A and 32A can plastically deform the outer periphery of the cylindrical pipe 20, and forms the deformed portion 21.

The supporting members 33 and 34 are provided for the rollers 31 and 32, respectively. The supporting members 33 and 34 hold shafts protruding from the respective rollers 31 and 32 such that the shafts are rotatable. A lower end of the supporting member 33 is fixed to the base portion 39. The supporting member 34 (located closer to the regulating mechanism 35) is fixed to the regulating mechanism 35.

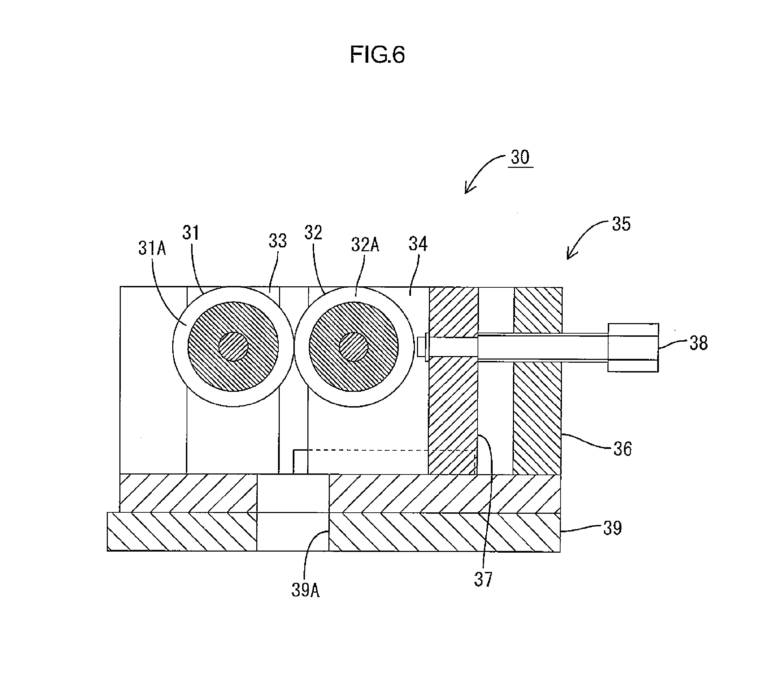

As illustrated in FIG. 6, the regulating mechanism 35 includes a fixed portion 36, a movable portion 37, and a roller adjustment portion 38. The fixed portion 36 is fixed to the base portion 39. The movable portion 37 moves in a direction in which the rollers 31 and 32 are arranged on the base portion 39. The roller adjustment portion 38 rotates to move the movable portion 37. The roller adjustment portion 38 includes a shaft and a polygonal head. The shaft has a screw thread in a portion close to the head but not in an end portion close to a tip thereof.

The fixed portion 36 has a screw hole. The screw thread in the shaft of the roller adjustment portion 38 fits the screw hole. The movable portion 37 has a rounded through hole having no screw thread therein. The end portion of the shaft of the roller adjustment portion 38 is inserted to the through hole of the movable portion 37. The roller adjustment portion 38 is fixed to the movable portion 37 such that the shaft is rotatable but unmovable relative to the direction in which the rollers 31 and 32 are arranged. The movable portion 37 is integrated with the supporting member 34 located closer to the movable portion 37 than the supporting member 33. Accordingly, when the roller adjustment portion 38 rotates, the movable portion 37 moves and the roller 32 moves in conjunction with the movable portion 37 in the direction in which the rollers 31 and 32 are arranged.

The base portion 39 has an insertion hole 39A in which the pipe 20 is to be inserted. The insertion hole 39A is a path for the pipe 20 that is passed through between the concave surface 31A of the roller 31 and the concave surface 32A of the roller 32.

Next, a method of forming the deformed portion 21 of the pipe 20 will be described. First, a metal pipe (not illustrated) that is cylindrical with a constant outer diameter and linear for an entire length thereof is prepared. Next, the roller adjustment portion 38 of the forming machine 30 is operated to increase a distance between the rollers 31 and 32 (the distance between the concave surfaces 31A and 32A that are opposite each other). The distance between the rollers 31 and 32 is increased such that the metal pipe can pass through. Then, the metal pipe is inserted between the concave surfaces 31A and 32A until a boundary between a non-deformed part of the pipe, which is not to be deformed and to be provided as the round portion 24, and a part thereof to be provided as the transitional portion 23 reaches the concave surfaces 31A and 32A. Then, the roller adjustment portion 38 is operated to bring the concave surfaces 31A and 32A into contact with the metal pipe.

The input member of the forming machine 30 sends a signal to drive the drive member. The drive member rotates the rollers 31 and 32 in directions in which the rollers 31 and 32 wind the metal pipe. When the distance between the concave surfaces 31A and 32A is gradually decreased by the rotation of the rollers 31 and 32, the metal pipe is deformed into the transitional portion 23. When the deformation of the metal pipe proceeds to a boundary between the transitional portion 23 and a part to be provided as the constant portion 22, the rotation of the roller adjustment portion 38 is stopped. Then, the rollers 31 and 32 rotate until reaching one end of the metal pipe. As a result, the one of the constant portions 22 is formed.

The same processes are performed for the other end of the metal pipe and this forms the other one of the deformed portion 21 (the transitional portion 23 and the constant portion 22). Consequently, the non-deformed part is provided as the round portion 24. The deformed portions 21 may be plastically formed step by step together with another forming machine arranged under the forming machine 30.

Next, a bending process of the round portion 24 will be described. One arm (not illustrated) holds one end part of the one deformed portion 21 close to the round portion 24. The other arm (not illustrated) holds one end part of the other deformed portion 21 close to the round portion 24. The one arm moves until reaching at a position that corresponds to a curvature (or an inclined angle) of the round portion 24. When the round portion 24 is plastically curved, the formation of the pipe 20 is complete. The bending of the round portion 24 in the extension direction is not limited to the above process. Other known processes can be used for bending the round portion 24.

The three electric wires 11 are then inserted into the pipe 20 that is formed as described above and the shield conductor 10 is prepared. The electric wires 11 can be inserted before or after the pipe 20 is formed. The shield conductor 10 is then arranged (routed) under the floor of the vehicle W (on a bottom surface of a floor-under panel with being exposed to a lower direction (opposite a road surface)). More specifically, the shield conductor 10 is arranged such that a direction of the short diameter portion 22A (a thickness direction of the short diameter portion) corresponds to the top-bottom direction. The shield conductor 10 is further arranged such that a direction of the long diameter portion 22B (a thickness direction) and a bending direction of the round portion 24 correspond to the right-left direction (a horizontal direction). Each metal terminal 12 of the electric wire 11 is connected to a terminal of each external electric wire that is extended to an upper interior side of the vehicle W.

Next, functions and effects of the embodiment will be explained. According to the present embodiment, the shield conductor 10 includes a pipe 20 made of metal and an electric wire 11. The electric wire 11 is passed through the pipe. The pipe 20 includes a round portion 24 and a deformed portion 21. The round portion 24 has a constant outer diameter in a peripheral direction of the pipe 20. The deformed portion 21 is in a different position from the round portion 24 in an extension direction in which the pipe 20 extends. The deformed portion 21 has a short diameter portion and a long diameter portion having different outer diameters in the peripheral direction of the pipe 20. The round portion 24 curves in the extension direction. In other words, an axis that passes through the center of the round portion 24 curves.

According to the above configuration, the shield conductor 10 is arranged such that the direction of the short diameter portion 22A (the thickness direction) corresponds to the narrower direction of the installation space and arranged such that the direction of the long diameter portion 22B (the thickness direction) corresponds to the wider direction of the installation space. Thus, the shield conductor 10 can be housed in the space using the narrower space in the direction of the short diameter portion 22A (the thickness direction) and using the wider space in the direction of the long diameter portion 22B (the thickness direction). With this configuration, the shield conductor 10 can be arranged using the space effectively.

In a bending process of the deformed portion 21, the deformed portion 21 of the pipe 20 can be bent relatively easier in the short diameter direction 22A. However, the deformed portion 21 is not easily bent in the long diameter direction 22B. This may reduce flexibility in routing of the shield conductor 10. In view of the above circumstances, the pipe 20 in this embodiment curves in the extension direction at the round portion 24. Thus, the pipe 20 can be easily bent in three-dimensional directions at the round portion 24 compared with a case in which the pipe 20 is bent at the deformed portion 21. Therefore, the shield conductor 10 can enhance the routing freedom by the round portion 24 while effectively using the space by the deformed portion 21.

The deformed portion 21 has the flat shape. With this configuration, the deformed portion 21 can easily house a plurality of electric wires therein. Further, the deformed portion 21 can be arranged in a compact space compared with the other configurations.

The deformed portion 21 is formed by deforming the cylindrical pipe 20. Thus, the deformed portion 21 can be easily formed compared with a case in which the deformed portion 21 is formed using different dies for different shapes of the deformed portion 21.

### <Second embodiment>

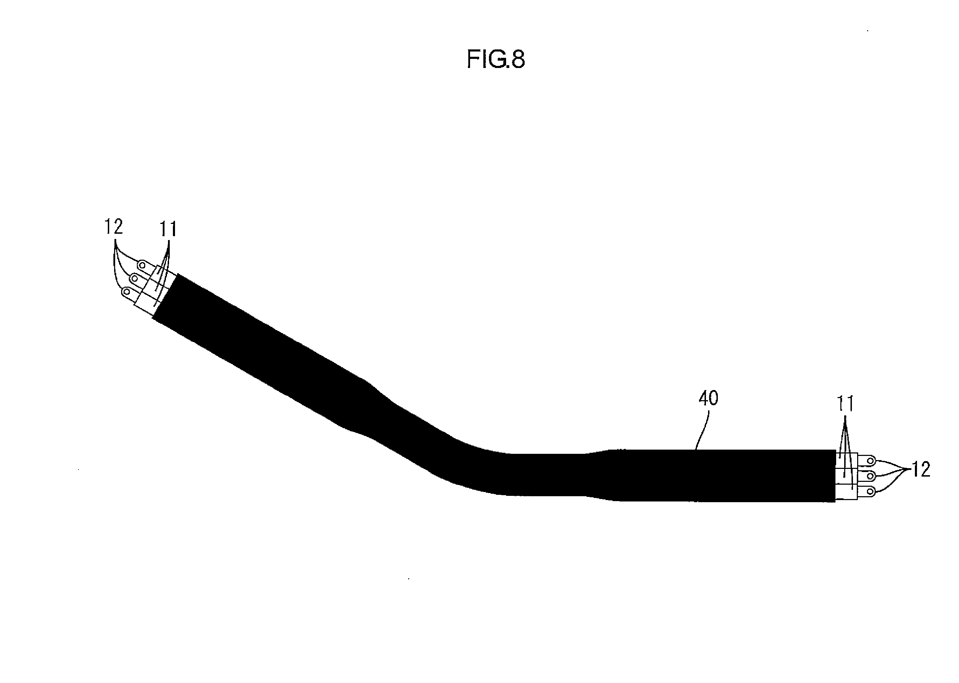

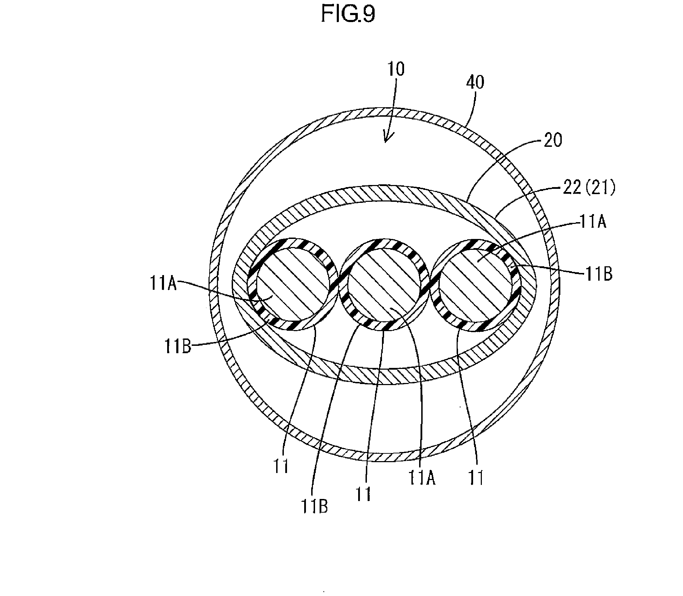

A second embodiment of this invention will be described with reference to FIG. 8 and FIG. 9. As illustrated in FIG. 8, the second embodiment is configured such that a heat shrinkable tube 40 covers an outer surface of the shield conductor 10. The same parts as those in the above embodiment will be indicated by the same symbols and will not be explained.

As illustrated in FIG. 9, the shield conductor 10 is inserted into the heat shrinkable tube 40 and then the heat shrinkable tube 40 is heated to shrink. As a result, the heat shrinkable tube 40 adheres tightly to an outer periphery of the pipe 20.

Because the heat shrinkable tube 40 adheres tightly to the outer periphery of the pipe 20, the outer periphery of the pipe 20 is protected by the heat shrinkable tube 40.

### <Third embodiment>

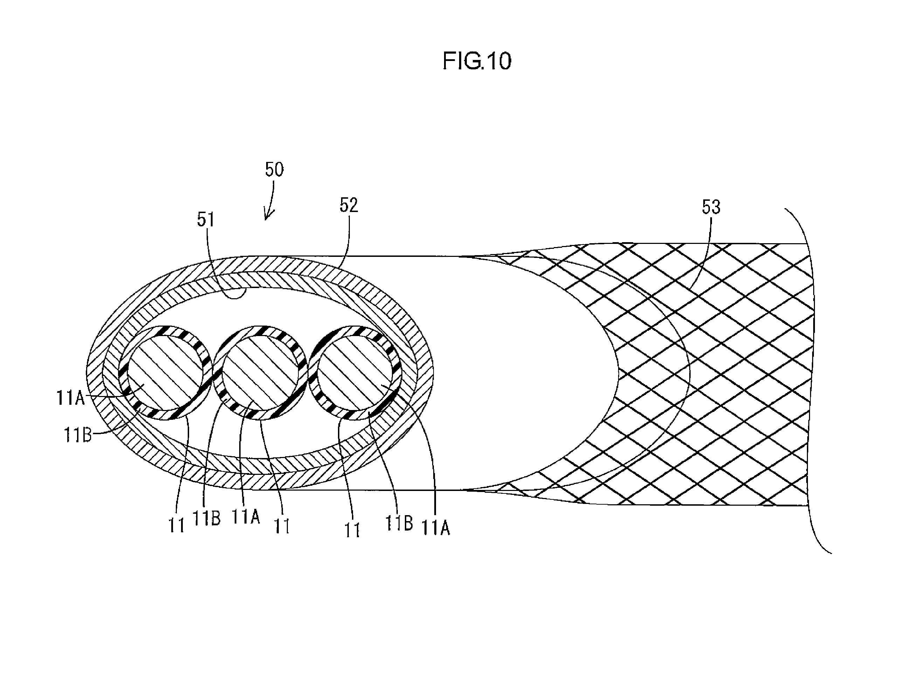

A third embodiment of this invention will be described with reference to FIG. 10. The same parts as those in the above embodiments will be indicated by the same symbols and will not be explained.

The pipe 20 according to the above embodiments is made of a material such as aluminum alloy. In the third embodiment, a pipe 50 is made of a cladding material including a first member 51 on an inner side and a second member 52 on an outer side that are layered as illustrated in FIG. 10. The first member 51 is made of aluminum or aluminum alloy. The second member 52 is made of iron or iron alloy.

A braided wire 53 includes tinned copper alloy wires. The braided wire 53 covers an end part of an outer periphery of the second member 52, namely at an end part of the pipe 50. The end part of the pipe 50 and the braided wire 53 are connected to each other (at the end part of the second member 52) by a connecting means such as welding, soldering, and swaging with a swage ring.

If different kinds of metals are in contact with each other, electrical corrosion occurs in general. Because the tinned copper alloy wires are used for the braided wire 53 in this embodiment, electrical corrosion is more likely to occur if the end part of the pipe 50 made of aluminum or aluminum alloy is connected to the braided wire 53.

According to this embodiment, the braided wire 53 is connected to the second member 52 of the pipe 50. The second member 52 is made of iron or iron alloy, which is less likely to cause electrical corrosion against the tinned material compared with aluminum or aluminum alloy. Thus, electrical corrosion is less likely to occur on the braided wire 53 that is connected to the second member 52 compared with a case in which the braided wire 53 is connected to the first member 51 (aluminum or aluminum alloy).

### <Fourth embodiment>

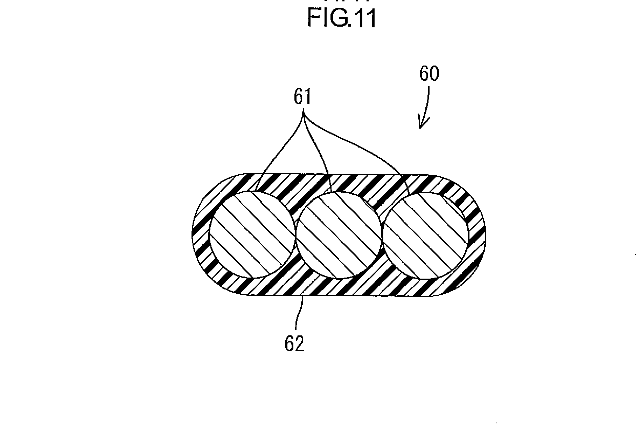

A fourth embodiment of this invention will be described with reference to FIG. 11. The same parts as those in the above embodiments will be indicated by the same symbols and will not be explained. The above embodiments include the round electric wires that are inserted to the pipes 20 and 50, respectively. The fourth embodiment includes a flat electric wire 60 that is inserted to a pipe.

As illustrated in FIG. 11, the flat electric wire 60 includes a flat conductor and an insulation coating 62. The flat conductor includes a plurality of core wires 61 that are arranged parallel to and in contact with one another. Thus, the flat conductor has a substantially flat shape. The insulation coating 62 is made of synthetic resin and covers a periphery of the flat conductor. The flat electric wire 60 does not include a shielding layer. Each core wire 61 includes a plurality of metal wires made of copper or copper alloy. The metal wires are twisted together into a helical shape.

The flat electric wire 60 has a substantially rectangular cross section, that is, has less dead space. In addition, the flat electric wire 60 has a large surface area, which provides high heat release capability. Thus, the current carrying capacity of the flat electric wire 60 electric currents can be increased.

The flat electric wire 60 has short diameter sides and long diameter sides. The flat electric wire 60 is arranged inside a non-illustrated pipe such that the short diameter sides of the flat electric wire 60 correspond to the short diameter portion of the deformed portion, and the long diameter sides of the flat electric wire 60 correspond to the long diameter portion of the deformed portion. Accordingly, the pipe (not illustrated) has the long diameter portion of which diameter corresponds to the number and the shape of the flat electric wires 60 in the cross-sectional view. Consequently, the pipe is more likely to have a flat shape.

With this configuration, the shield conductor can be provided with the flat electric wire 60 having the large surface area and high heat release capability can be arranged in space that is effectively used while still can be arranged effectively using space.

### <Other embodiment>

This invention is not limited to the embodiments described in the above description and explained with reference to the drawings. The following embodiments may be included in the technical scope of this invention.
(1) In the above embodiments, the three electric wires 11 are inserted to the pipe 20. However, the technical scope is not limited to the three electric wires 11. The number of the electric wires 11 may be two, or equal to or more than four.

(2) The shield conductors 10 are arranged in underfloor space of the vehicle W. However, the shield conductor 10 may be arranged at different locations from the underfloor space of the vehicle W. Further, the technical scope is not limited to the vehicle W and may to anything that requires the shield conductor other than the vehicle W.

(3) According to the above embodiment, the number of the deformed portion 21 and the round portion 24, the length thereof in the extension direction, and the position thereof in the entire length of the pipes 20 and 50 are determined based on the wiring route for the electric wires 11 under the floor of the vehicle W. If the shield conductor 10 is arranged in a different location, the number of the deformed portion 21 and the round portion 24, the length thereof in the extension direction, and the position thereof in the entire length with respect to the deformed portion 21 and the round portion 24 can be determined based on the wiring route.

(4) The pipe 20 is formed by deforming the cylindrical metal pipe using the forming machine 30. However, this technical scope is not limited thereto. The pipe 20 may be formed using the following processes: preparing a board; forming a deformed portion in the board using a die; curving the board to a circular shape; and connecting edges of the board each other by welding.

(5) Each of the above embodiments includes the deformed portion 21 that has the flat shape. However, a non-flat oval shape or a shape having a recess in a part may be used for the deformed portion 21 if the shape includes at least a short diameter portion and a long diameter portion.

(6) In the above embodiments, the round portion 24 curves. However, this technical scope is not limited thereto and the axis of the round portion 24 may be sharply bent.

### Problem to be Solved by the Invention

There is a demand for arranging the shield conductor effectively using space for installation of a shield conductor in a vehicle. More specifically, when a metal pipe having a circular outer periphery is arranged under a floor of a vehicle, the space under the floor requires at least the same height as the outer diameter of the metal pipe. The space under the floor has a limitation in height and thus a significant level of layout design is required for the metal pipe. On the other hand, the space that expands lateral to the metal pipe may be larger than a size required for housing the metal pipe. Therefore, the conventional technology has a problem in arrangement of the shield conductor not effectively using the space.

This invention was accomplished in view of the foregoing circumstances. An object of this invention is to provide a shield conductor that can be arranged using a space effectively.

### Means for solving the problem

The technology disclosed in this description includes a shield conductor including a pipe a pipe made of metal and an electric wire. The electric wire is passed through the pipe. The pipe includes a round portion and a deformed portion. The round portion has a constant outer diameter in a peripheral direction of the pipe. The deformed portion is in a different position from the round portion in an extension direction in which the pipe extends. The deformed portion has a short diameter portion and a long diameter portion having different outer diameters in the peripheral direction of the pipe. The round portion curves in the extension direction.

According to the above configuration, the shield conductor is arranged such that a direction of the short diameter portion (a thickness direction) corresponds to a narrower direction of an installation space and arranged such that a direction of the long diameter portion (a thickness direction) corresponds to a wider direction of the installation space. Thus, the shield conductor can be housed in the space using a narrower space in the direction of the short diameter portion (the thickness direction) and using a wider space in the direction of the long diameter portion (the thickness direction). With this configuration, the shield conductor can be arranged using the space effectively.

In a bending process of the deformed portion, the deformed portion of the pipe can be bent relatively easier in the short diameter direction. However, the deformed portion is not easily bent in the long diameter direction. This may restrict a routing freedom of the shield conductor. In view of the above circumstances, the pipe in this embodiment curves in the extension direction at the round portion. Thus, the pipe can be easily bent in three-dimensional directions at the round portion compared with a case in which the pipe is bent at the deformed portion. Therefore, the shield conductor can enhance the routing freedom by the round portion while effectively using the space by the deformed portion.

The following configurations are further preferable.
The deformed portion 21 has the flat shape. With this configuration, the deformed portion 21 can easily house the plurality of electric wires therein. Further, the deformed portion 21 can be arranged in the compact space compared with the other configurations.

The deformed portion is formed by deforming the cylindrical pipe. Thus, the deformed portion can be easily formed compared with a case in which the deformed portion is formed using different dies for different shapes of the deformed portion.

With the above configuration, the heat shrinkable tube that is coherent with the pipe can protect the outer surface of the pipe.

Each end of the pipe is connected to the shield member that continues from the pipe. The pipe is made of a cladding material including the first member on the inner side thereof and the second member on the outer side thereof that are layered with each other. The second member is made of the material that is less likely to cause electrical corrosion against the shield member compared with the material of the first member. The shield member covers the end part of the outer periphery of the second member. It is known that different metals cause electrical corrosion if the metals are connected to each other. However, the shield member according to this configuration is connected to the second member made of the material that is less likely to cause electrical corrosion against the shield member than the first member. Thus, electrical corrosion is less likely to cause compared with a case in which the shield member is connected to the first member.

The shield member is the braided member. The first member is made of aluminum or aluminum alloy. The second member is made of iron or iron alloy. The braided wire is generally made of the tinned copper alloy wire. If the end part of the pipe made of aluminum or aluminum alloy is connected to the braided wire, electrical corrosion is more likely to occur. However, the braided wire is connected to the outer surface of the pipe made of iron or iron alloy according to this configuration. Therefore, electrical corrosion is less likely to occur compared with a case in which the braided wire is connected to aluminum or aluminum alloy.

The electric wire is the flat electric wire including the flat conductor and the insulation coating. The flat conductor has the flat shape. The insulation coating coats the flat conductor. The flat electric wire is arranged such that the short diameter sides of the flat electric wire correspond to the short diameter portions of the deformed portion, and the long diameter sides of the flat electric wire correspond to the long diameter portions of the deformed portion. With this configuration, the shield conductor can be provided with the flat electric wire 60 having the large surface area and high heat release capability can be arranged in space that is effectively used while still can be arranged effectively using space.

The shield conductor is arranged under the floor of the vehicle.

### (Effect of the technology disclosed in the specification)

According to the technology disclosed in this description, the shield conductor can be arranged using the space effectively.

## Claims

1. A shield conductor comprising:
a pipe made of metal; and
an electric wire passed through the pipe,
wherein the pipe includes:
a round portion having a constant outer diameter in a peripheral direction of the pipe; and
a deformed portion being in a different position from the round portion in an extension direction in which the pipe extends, the deformed portion having a short diameter portion and a long diameter portion having different outer diameters in the peripheral direction of the pipe, and
wherein the round portion curves in the extension direction.

2. The shield conductor according to claim 1, wherein the deformed portion has a flat shape.

3. The shield conductor according to one of claims 1 and 2, wherein the deformed portion is formed by deforming a pipe having a tubular shape.

4. The shield conductor according to any one of claims 1 to 3, wherein the pipe is provided with a heat shrinkable tube that adheres to an outer surface of the pipe.

5. The shield conductor according to any one of claims 1 to 4, wherein
the pipe is made of a cladding material including a first member on an inner side thereof and a second member on the outer side thereof that are layered,
the second member is made of a material such that electrical corrosion is less likely to occur against the shield member compared with a material of the first member,
a shield member is connected to at an end of the pipe,
and
the shield member covers an outer periphery of the second member at the end of the pipe.

6. The shield conductor according to claim 5, wherein the shield member is a braided wire,
the material of the first member is aluminum or aluminum alloy, and
the material of the second member is copper or copper alloy.

7. The shield conductor according to any one of claims 1 to 6, wherein
the electric wire is a flat electric wire including a flat conductor and an insulation coating, the flat conductor having a flat shape and being covered with the insulation coating, and
the flat electric wire includes a short diameter side and a long diameter side, the flat electric wire being arranged such that the short diameter side of the flat electric wire corresponds to the short diameter portion of the deformed portion and the long diameter side of the flat electric wire corresponds to the long diameter portion of the deformed portion.

8. The shield conductor according to any one of claims 1 to 7, wherein the shield conductor arranged under a floor of a vehicle.
